# EUROPÄISCHE PATENTSCHRIFT

(11) **EP 1 092 177 B1**
(45) Veröffentlichungstag und Bekanntmachung des Hinweises auf die Patenterteilung: **20.10.2004**
(21) Anmeldenummer: 00941884.9
(22) Anmeldetag: 27.04.2000
(51) Int. Cl.: G05B 9/03

(54) **REGLER BZW. TRIEBWERKSREGLER, TRIEBWERK UND VERFAHREN ZUM REGELN EINES STELL- ODER ANTRIEBSSYSTEMS BZW. EINES TRIEBWERKS**
CONTROLLER OR ENGINE CONTROLLER, ENGINE AND METHOD FOR ADJUSTING A CONTROL OR DRIVE SYSTEM OR AN ENGINE
REGULATEUR OU REGULATEUR DE PROPULSEUR, PROPULSEUR ET PROCEDE POUR REGULER UN SYSTEME DE REGLAGE OU D'ENTRAINEMENT OU UN PROPULSEUR

(30) Priorität: 29.04.1999 DE 19919504
(43) Veröffentlichungstag der Anmeldung: 18.04.2001
(73) Patentinhaber: MTU Aero Engines GmbH, 80995 München (DE)
(72) Erfinder: SCHWAMM, Friedrich, D-85604 Zorneding (DE)
(74) Vertreter: Einsele, Rolf W.
(86) Internationale Anmeldenummer: PCT/DE2000/001318
(87) Internationale Veröffentlichungsnummer: WO 2000/067080

(56) Entgegenhaltungen:
- EP-A- 0 186 613
- US-A- 5 067 080
- US-A- 5 613 064
- US-A- 5 719 764

## Beschreibung

Die Erfindung betrifft einen Regler für sicherheitskritische, höchst zuverlässige Anwendungen, z.B. für Regelsysteme zur Verwendung in der Luftfahrt oder in Kernkraftwerken, ein Stell- oder Antriebssystem sowie ein Verfahren zum Regeln eines Stell- oder Antriebssystems. Der Regler betrifft insbesondere einen Triebwerksregler, und das Stell- oder Antriebssystem insbesondere ein Triebwerk. Bei der Verwendung in Flugtriebwerken wird die Erfindung vor allem bei einer flugkritischen elektronischen bzw. digitalen Regelung eingesetzt (sogenannte FADEC-Triebwerke - full authority digital engine control). Ganz besonders ist die Erfindung für solche Flugtriebwerke geeignet, die in einmotorigen Flugzeugen oder Antrieben mit Schubvektorsteuerung eingesetzt werden.

Bei FADEC-Triebwerken ist eine zweikanalige Ausführung des Triebwerksreglers bekannt, bei dem alle funktionswesentlichen Komponenten zweifach vorhanden sind. Dies gilt auch für zweikanalige Regler, die in sicherheitskritischen bzw. höchst zuverlässigen Anwendungen zum Einsatz kommen. Solche Komponenten sind insbesondere wichtige Sensoren und Aktuatoren der Triebwerksbaugruppe bzw. Regelstrecke, Hardware zur Signalkonditionierung und Signalkonvertierung sowie die eigentlichen Prozessoreinheiten zur Ausführung des Regelverfahrens wie dies auch in US 5,067,080 B2 gezeigt wird. Hierin ist ein zweikanaliger Triebwerksregler offenbart, bei dem die zur Regelung verwendeten Signale zwischen den beiden Kanälen derart ausgetauscht werden, dass die Computer selbst für den Datenaustausch zwischen den Kanälen nicht benötigt werden. Das bewirkt, dass die aufbereiteten Signale von Kanal 1 auch bei ausgefallenem Computer des Kanals 1 zu Kanal 2 übertragen werden können und umgekehrt. Die Computerüberwachung wird dabei über zwei synchronisierte Computer pro Kanal durchgeführt, die bit-synchron identische Programme ausführen. Die Ausgangssignale dieser Computer werden auf Bit-Gleichheit geprüft, die Unterschiede als Computerfehler gewertet.

Ein zweikanaliger Regler bzw. Triebwerksregler stellt eine prinzipiell ausreichende Redundanz auch für sicherheitskritische Anwendungen bereit. Das Risiko eines Ausfalls beider Kanäle ist bei moderner Schaltungstechnologie vernachlässigbar gering. Es besteht aber die Schwierigkeit, einen Ausfall eines Kanals sicher zu erkennen. Während es beispielsweise bei einem dreikanaligen Regler möglich ist, die von jedem Kanal erzeugten Stellsignale zu vergleichen und eine Mehrheitsentscheidung durchzuführen, kann bei einem zweikanaligen Regler aus einer bloßen Abweichung der Stellsignale voneinander nicht erkannt werden, welcher der Kanäle eine Fehlfunktion aufweist.

Aus diesen Gründen ist im Stand der Technik bei zweikanaligen Reglern eine im wesentlichen autarke Überwachung innerhalb jedes der beiden Kanäle vorgesehen. Dies heißt, dass die Funktionskontrolle jedes Kanals durch Plausibilitätsüberprüfungen erfolgt, bei denen die Daten des jeweils anderen Kanals zwar zur Fehlererkennung einbezogen werden können, aber keine Autorität bezüglich der Fehlerlokalisierung und der Fehlerreaktionen haben. Für die Sensorik, die Aktuatorik und die Hardware zur Signalkonditionierung und Signalkonvertierung sind solche Plausibilitätsüberprüfungen und andere kanalautarke Überwachungsmechanismen mit einer hohen Zuverlässigkeit bei der Fehlererkennung verfügbar.

Auch im Hinblick auf die Prozessoreinheiten können manche Fehlersituationen relativ leicht und zuverlässig überwacht werden. So ist beispielsweise der komplette Funktionsausfall ("crash") einer Prozessoreinheit dadurch erkennbar, dass ein Überwachungszeitgeber vorgesehen ist, der regelmäßig von der Prozessoreinheit zurückgesetzt wird. Erfolgt die Rücksetzung nicht vor Ablauf eines durch den Zeitgeber vorbestimmten Zeitintervalls, wird ein Alarm ausgelöst. Andere Fehlfunktionen können beispielsweise durch eine Busüberwachungslogik erkannt werden.

Es besteht jedoch das Problem, dass manche Fehler der Prozessoreinheiten nur schwer zu erkennen sind. Dies betrifft insbesondere Fehlfunktionen, die nur zeitweise oder in bestimmten Betriebszuständen des Prozessors auftreten. So kann zum Beispiel der Widerstand einer Metallisierung durch Korrosion allmählich ansteigen. Dies kann zunächst zu temporären Fehlern führen, die beispielsweise nur auftreten, wenn in manchen Flugsituationen oder in besonderen Betriebszuständen, wie beim Anlassen des Triebwerks, die Prozessor-Versorgungsspannung etwas unter den Normalwert absinkt oder über diesen Wert ansteigt. Solche Fehler, die auch Frühindikatoren für einen dauerhaften Ausfall sein können, können mit relativ großer Wahrscheinlichkeit zu gefährlichen Fehlfunktionen führen und sind bei zweikanaligen Reglern nur schwer zu ermitteln.

Die Erfindung hat demgemäß die Aufgabe, die genannten Probleme zu vermeiden und die Betriebssicherheit insbesondere eines zweikanaligen Reglers mit geringem Aufwand zu erhöhen. Besonders soll durch die Erfindung eine zuverlässige Erkennung von gefährlichen Fehlfunktionen eines Prozessors ermöglicht werden.

Erfindungsgemäß wird diese Aufgabe durch einen Regler mit den Merkmalen des Anspruchs 1, durch ein Stell- oder Antriebssystem mit den Merkmalen des Anspruchs 9 und durch ein Verfahren zum Regeln eines Stell- oder Antriebssystems mit den Merkmalen des Anspruchs 11 gelöst. Die abhängigen Ansprüche betreffen bevorzugte Ausgestaltungen der Erfindung.

Die Erfindung beruht auf der Grundidee, Berechnungsergebnisse in einem Kanal des Reglers erstens mit einer kanalinternen Abschätzung der korrekten Ergebnisse und zweitens mit den Ergebnissen des jeweils anderen Reglerkanals zu vergleichen. Es finden also zwei Überprüfungen statt, nämlich kanalintern auf Plausibilität und kanalextern durch einen Ergebnisvergleich. Dadurch wird auch ohne einen dritten Reglerkanal eine ähnlich zuverlässige Fehlererkennung wie bei einem dreikanaligen Regleraufbau erzielt.

Erfindungsgemäß ist vorgesehen, dass jeder Reglerkanal mindestens zwei Prozessoreinheiten aufweist, von denen für jede zu überprüfende Funktion je eine als Berechnungseinheit für den eigentlichen Berechnungsvorgang und eine andere als Kontrolleinheit arbeitet. Die Berechnungseinheit und die Kontrolleinheit führen sowohl die kanalinterne Plausibilitätsüberprüfung der Ergebnisse der Berechnungseinheit als auch den Vergleich mit den Ergebnissen des anderen Kanals durch. Durch diese Maßnahme ist sichergestellt, dass die beiden Kontrollen unabhängig von einer eventuellen Fehlfunktion der Berechnungseinheit oder der Kontrolleinheit erfolgen.

Das Vorhandensein von mehreren Prozessoreinheiten pro Kanal ist in der Regel erforderlich, um die benötigte Rechenleistung bereitzustellen. Selbst unter Berücksichtigung des zu erwartenden Anstiegs der Rechenkapazitäten sind auch in der Zukunft zumindest zwei Prozessoreinheiten pro Kanal wünschenswert, um Software unterschiedlicher Kritikalitätseinstufungen voneinander trennen zu können. Unter diesen Randbedingungen ist kein zusätzlicher Hardwareaufwand für die erfindungsgemäße Lösung erforderlich. Auch in anderen Konstellationen kann die Erfindung eine besonders günstige Kosten/Nutzen-Relation aufweisen.

Insgesamt sorgt somit die Erfindung für eine sichere Erkennung von Computerausfällen bei größtmöglicher Nutzbarkeit der installierten Rechenleistung. Jede Prozessoreinheit der beiden Reglerkanäle benötigt nur einen kleinen Teil ihrer Rechenkapazität für ihre Aufgaben als Kontrolleinheit. Den überwiegenden Teil der Rechenkapazität kann die Prozessoreinheit verwenden, um als Berechnungseinheit komplexe Regelprozesse anderer Regelkreise oder andere Funktionen auszuführen.

Vorzugsweise weist jede Kontrolleinheit einen Fehlerintegrator auf, der bei den Vergleichen ermittelte Abweichungen und sonstige Indikatorwerte von Fehlfunktionen aufintegriert. Die Integrationsgeschwindigkeit ist dabei bevorzugt von der Schwere der Abweichung bzw. Fehlfunktion abhängig. Der durch den Fehlerintegrator ermittelte Abweichungswert klingt vorzugsweise allmählich ab, wenn keine weiteren Fehlfunktionen auftreten.

Vorzugsweise wird eine bei den Vergleichen ermittelte Abweichung nur dann gewertet, wenn beide Vergleiche eine Fehlfunktion des überwachten Kanals anzeigen. Dadurch kann der jeweils fehlerhafte Kanal zuverlässig ermittelt werden.

In bevorzugten Ausführungsformen sind die überprüften Berechnungsergebnisse Ausgangsdaten der Berechnungseinheiten oder Stellsignale oder Zwischensignale.

Bevorzugt eignet sich der Regler für den Einsatz als Triebwerksregler, bei denen durch Defekte bei einem digitalen Triebwerksregler "gefährliche" Triebwerks- oder System-Fehlfunktionen verursacht werden können. Dies betrifft insbesondere einmotorige Flugzeuge oder Flugzeuge mit Schubvektor-Steuerung, weil hier eine ungewollte Triebwerksabschaltung oder ein falsch geregelter Schubvektor zum Verlust des Flugzeugs führen können. Bei anderen Anwendungen, beispielsweise mehrmotorigen Zivil-Flugzeugen, existieren in der Regel "sichere" Autoritätslimitierungen für FADEC-Systeme (z.B. vom FADEC-System unabhängiger Drehzahlbegrenzer). Für solche Anwendungen ist der Einsatz der Erfindung zwar wünschenswert, aber nicht unbedingt erforderlich.

Ein Stell- oder Antriebssystem umfasst Aktuatoren, Sensoren und einen erfindungsgemäßen Regler. Die Aktuatoren, wie elektromechanische Stellmotoren, Pumpen od dgl., dienen zur Steuerung des Systems. Die Sensoren, z.B. zur Messung von Positionen, Temperaturen, Drehzahlen od. dgl., dienen zur Erfassung des Systemzustands (Ist-Zustand), der im Regler zur Stellsignalbildung weiterverarbeitet wird. Derartige Stell-oder Antriebssysteme werden für sicherheitskritische Anwendungen eingesetzt. Dazu gehören z.B. das Steuersystem für eine elektromechanische Flugzeugtür, das Regelsystem stationärer Gasturbinen sowie Flugregelsysteme, die zur Navigation des Flugzeugs dienen. Insbesondere bei hoch sicherheitskritischen Anwendungen, die eine hohe funktionale Verfügbarkeit erfordern, wie FADEC-Systeme für einmotorige Flugzeuge, Flugregelsysteme oder Schubvektorsteuerungen, besteht eine Dissimilarität zwischen den Prozessormodulen der beiden Reglerkanäle.

Mehrere Ausführungsbeispiele der Erfindung werden nun anhand der schematischen Zeichnungen genauer beschrieben. Es zeigen:
Fig. 1 ein stark abstrahiertes Blockschaltbild eines Flugtriebwerks mit zugehörigen Baugruppen für die Triebwerksregelung,
Fig. 2 ein Blockschaltbild der beiden Reglerkanäle eines erfindungsgemäßen Reglers bzw. Triebwerksreglers,
Fig. 3 ein Datenflussdiagramm des beim Betrieb des Reglers bzw. Triebwerksreglers nach Fig. 1 ablaufenden Berechnungsverfahrens und
Fig. 4 ein schematisches Diagramm, in dem die Dissimilarität zwischen den Prozessormodulen jedes Reglerkanals beispielhaft dargestellt ist.

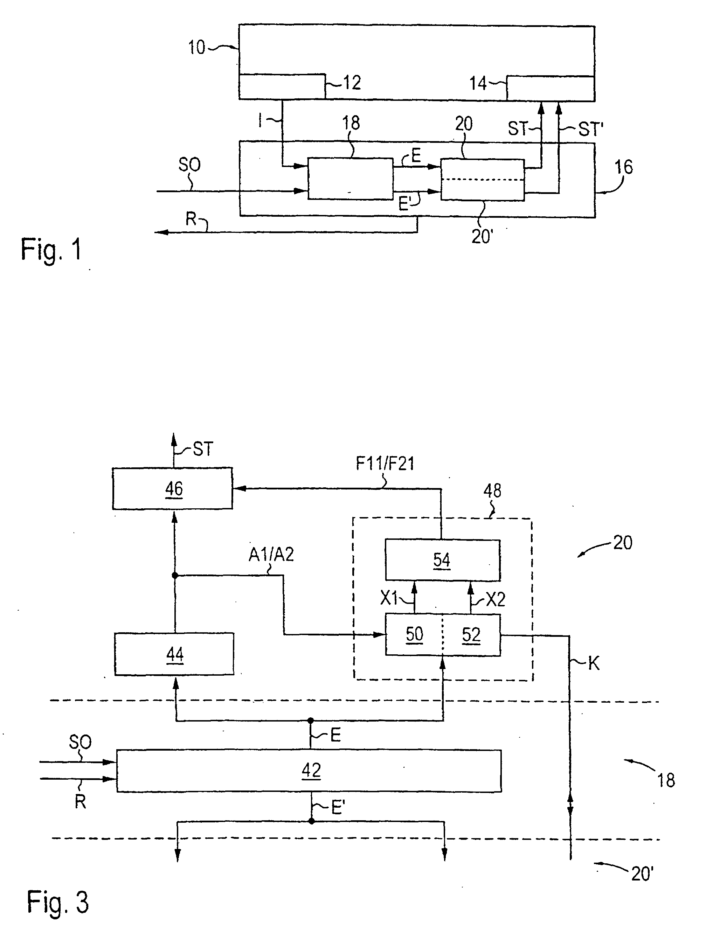

In Fig. 1 ist als Stell- oder Antriebssystem ein Flugtriebwerk für eine einmotorige Anwendung mit Schubvektorsteuerung gezeigt. Das Flugtriebwerk weist eine Triebwerksbaugruppe 10 mit dem eigentlichen Turbinenaggregat und einer Vielzahl von Sensoren 12 und Aktuatoren 14 auf. Ein als Triebwerksregter fungierender Regler 16 erhält Istwertsignale I von den Sensoren 12 sowie Sollwertsignale SO, die aus den Steuerbewegungen des Piloten von einer geeigneten Bordelektronik (in Fig. 1 nicht gezeigt) berechnet werden. Der Triebwerksregler 16 erzeugt Stellsignale ST und ST' für die Aktuatoren 14 der Triebwerksbaugruppe 10 und Rückmeldesignale R für die Bordelektronik und den Piloten.

Der Triebwerksregler 16 weist eine Sollwert-Aufbereitungseinrichtung 18 auf, die aus den Sollwertsignalen SO und den von den Sensoren 12 gelieferten Istwertsignalen I zwei Sätze Eingangsdaten E, E' für einen ersten bzw. einen zweiten Reglerkanal 20, 20' generiert. Die beiden Reglerkanäle 20, 20' erzeugen zusammen die Stellsignale ST und ST'. Im hier beschriebenen Ausführungsbeispiel sind stets entweder die Stellsignale ST oder die Stellsignale ST' aktiv (oder bei einer sehr schweren Funktionsstörung weder ST noch ST'). In Ausführungsalternativen können dagegen im Normalbetrieb beide Stellsignalgruppen ST, ST' unabhängig voneinander ausgegeben werden.

In einfachen Ausgestaltungen nimmt die Sollwert-Aufbereitungseinrichtung 18 nur eine geeignete Skalierung der Soll- und Istwertsignale SO, I vor und führt, falls die Soll- und Istwertsignale SO, I nicht bereits in digitaler Form vorliegen, eine Analog/Digital-Umsetzung durch. Die beiden Sätze von Eingangsdaten E, E' sind dann identisch und weisen jeweils die Informationen aller Soll- und Istwertsignale SO, I auf. Im einfachsten Extremfall dienen die (digitalen) Soll- und Istwertsignale SO, I unmittelbar als Eingangsdaten E sowie als Eingangsdaten E'. Eine gesonderte Sollwert-Aufbereitungseinrichtung 18 ist in solchen Ausführungsvarianten nicht erforderlich.

In komplexeren Ausführungsalternativen sind jeweils paarweise redundante Sensoren 12 vorgesehen, so daß zumindest jedes wichtige Istwertsignal I getrennt in zwei Kanälen ermittelt wird. Entsprechendes gilt für die Sollwertsignale SO. Die Sollwert-Aufbereitungseinrichtung 18 weist in diesen Ausführungsalternativen eine Signalwahllogik auf. Ferner sind dann in der Sollwert-Aufbereitungseinrichtung 18 Mittel zur Plausibilitätsüberprüfung der Soll- und Istwertsignale SO, I in beiden Kanälen vorgesehen. Im Normalbetrieb verwendet die Signalwahllogik zur Erzeugung der Eingangsdaten E die Informationen des ersten Kanals und zur Erzeugung der Eingangsdaten E' die Informationen des zweiten Kanals. Werden jedoch in einem Kanal Werte ermittelt, die beispielsweise auf eine Fehlfunktion eines der Sensoren 12 hinweisen, dann ignoriert die Sollwert-Aufbereitungseinrichtung 18 die wahrscheinlich fehlerhaften Signale dieses Kanals und verwendet statt dessen die entsprechenden Signale des anderen Kanals, um beide Eingangsdatensätze E, E' zu erzeugen. Jeder Kanal der Sollwert-Aufbereitungseinrichtung 18 hat dazu stets die Istwertdaten I beider Kanäle zur Verfügung.

In dem in Fig. 1 gezeigten Detaillierungsgrad unterscheidet sich das erfindungsgemäße Flugtriebwerk nicht vom Stand der Technik. Der Unterschied liegt lediglich im Aufbau und der Funktionsweise der beiden Reglerkanäle 20, 20' des Triebwerksreglers 16, die im folgenden erläutert werden.

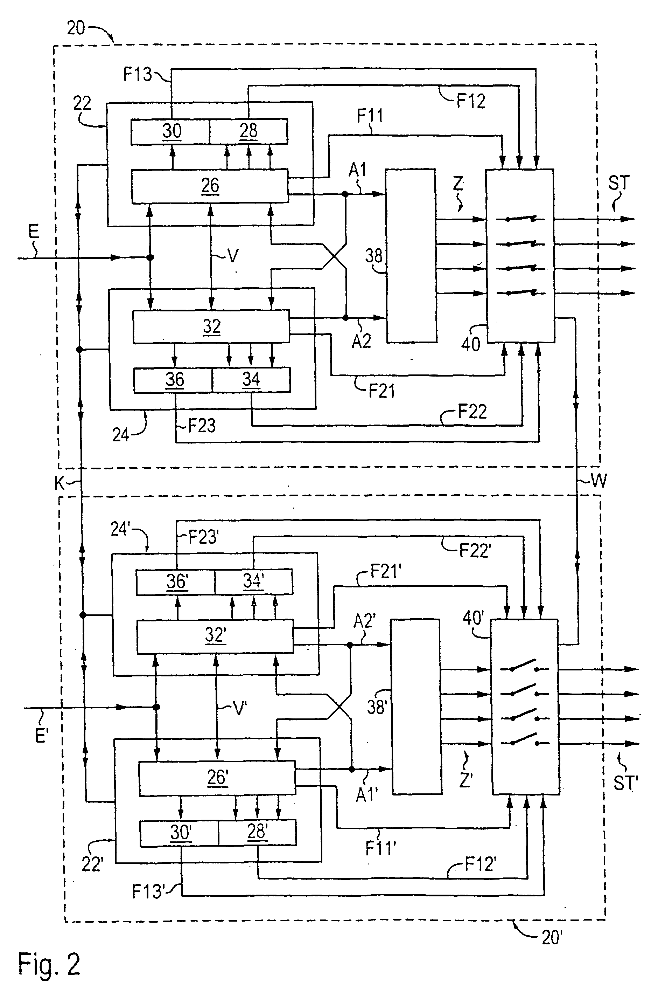

In dem Blockschaltbild von Fig. 2 sind die beiden Reglerkanäle 20, 20' schematisch dargestellt. Der erste Reglerkanal 20 weist zwei im wesentlichen identische Prozessoreinheiten 22, 24 auf. In der ersten Prozessoreinheit 22 ist ein Prozessormodul 26 vorgesehen, das aus dem eigentlichen Prozessor, Arbeitsspeicher, Programmspeicher mit darin enthaltener Software, Daten- und Adressbus und anderen Komponenten besteht und somit einen eigenständigen Computer bildet.

Die erste Prozessoreinheit 22 weist ferner Baugruppen zur hardwareseitigen Überwachung des Prozessormoduls 26 auf, nämlich in dem hier beschriebenen Ausführungsbeispiel eine Busüberwachungslogik 28 zum Erkennen von unzulässigen Zugriffen auf die Busse des Prozessormoduls 26 und einen Überwachungszeitgeber (watch dog timer) 30 zum Erkennen eines Funktionsausfalls ("crash") des Prozessormoduls 26. In Ausführungsvarianten sind andere oder zusätzliche Überwachungsbaugruppen vorgesehen.

Die zweite Prozessoreinheit 24 ist ebenso wie die erste Prozessoreinheit 22 mit einem Prozessormodul 32, einer Busüberwachungslogik 34 und einem Überwachungszeitgeber 36 ausgestattet. Die beiden Prozessoreinheiten 22, 24 erhalten identische Eingangsdaten E. Ferner können die Prozessoreinheiten 22, 24 Daten über eine bidirektionale Verbindung V austauschen.

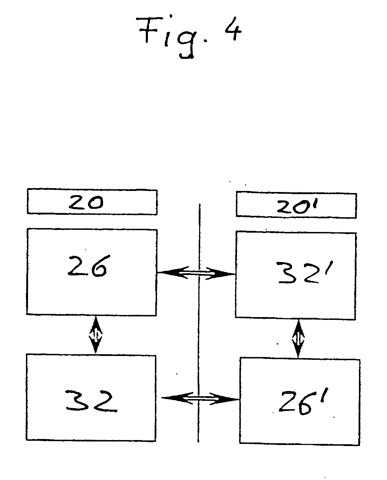

Bei Systemen mit zusätzlich extrem hohen funktionalen Verfügbarkeiten können die Prozessormodule 26, 32 bzw. 26', 32' dissimilar, z.B. von unterschiedlichen Herstellern, aufgebaut sein; wie im Beispiel in Fig. 4 dargestellt ist.

Die Rechenergebnisse der Prozessoreinheiten 22, 24 werden als Ausgangsdaten A1, A2 bereitgestellt. Genauer werden die Ausgangsdaten A1 der ersten Prozessoreinheit 22 an eine Umsetzeinheit 38 sowie an die zweite Prozessoreinheit 24 geliefert. Die Ausgangsdaten A2 der zweiten Prozessoreinheit 24 liegen an der Umsetzeinheit 38 an und sind an die erste Prozessoreinheit 22 rückgekoppelt. Die Umsetzeinheit 38 skaliert die Ausgangsdaten A 1, A2 und führt eine für die Aktuatoren 14 der Triebwerksbaugruppe 10 geeignete Signalkonditionierung (gegebenenfalls einschließlich einer Digital/Analog-Wandlung) durch. Für jeden der Aktuatoren 14 sind in der Regel nur entweder in den Ausgangsdaten A1 oder in den Ausgangsdaten A2 Steuerinformationen enthalten.

Die umgesetzten Ausgangsdaten A1, A2 liegen als Zwischensignale Z an einer Kanalwahleinheit 40 an. Die Kanalwahleinheit 40 erzeugt ihrerseits die eigentlichen Stellsignale ST für die Aktuatoren 14. Um einen Fehler in der ersten Prozessoreinheit 22 erkennen zu können, erhält die Kanalwahleinheit 40 ein Fehlersignal F11 von dem Prozessormodul 26, ein Fehlersignal F12 von der Busüberwachungslogik 28 und ein Fehlersignal F13 von dem Überwachungszeitgeber 30. Zur Kontrolle der zweiten Prozessoreinheit 24 erhält die Kanalwahleinheit 40 ein Fehlersignal F21 von dem Prozessormodul 32, ein Fehlersignal F22 von der Busüberwachungslogik 34 und ein Fehlersignal F23 von dem Überwachungszeitgeber 36.

Der zweite Reglerkanal 20' ist im wesentlichen identisch zu dem gerade beschriebenen ersten Reglerkanal 20. Daher wird auf die obige Beschreibung verwiesen. In Fig. 2 sind für die einzelnen Komponenten des zweiten Reglerkanals 20' Bezugszeichen verwendet, die sich von denen des ersten Reglerkanals 20 nur durch einen angehängten Apostroph unterscheiden.

Die insgesamt vier Prozessoreinheiten 22, 24, 22', 24' der beiden Reglerkanäle kommunizieren untereinander mit einer seriellen, bidirektionalen Kommunikationsverbindung K. Auch die beiden Kanalwahleinheiten 40, 40' sind durch eine bidirektionale Verbindung W miteinander verknüpft. Über diese Verbindung W wird ein Flip-Flop-Effekt der beiden Kanalwahleinheiten 40, 40' erreicht.

Zu jedem Zeitpunkt hat nur einer der beiden Reglerkanäle 20, 20' die Autorität zur Systemsteuerung. In der Darstellung von Fig. 2 ist dies beispielsweise der Reglerkanal 20. Die Zwischensignale Z dieses Reglerkanals 20 werden dann von der Kanalwahleinheit 40, die zum Beispiel ein Relais aufweisen kann, als Stellsignale ST ausgegeben. Die andere Kanalwahleinheit 40' trennt dagegen die Zwischensignale Z' von den Stellsignalausgängen, so dass die Stellsignale ST' inaktiv sind. Nach einer Kanalumschaltung, die von einem erkannten Funktionsfehler oder durch ein manuelles Kommando, z.B. Pilotenkommando, ausgelöst wird, sind die Verhältnisse umgekehrt.

Die Eingangsdaten E, die abgeleitet von den Istwertsignalen I (Fig. 1) in dem Reglerkanal 20 auf die beiden Prozessoreinheiten 22, 24 geführt werden, weisen identische Werte auf, sofern nicht bei der Datenübertragung oder in einem der "Buffer" (Speicher der Prozessoreinheiten 22, 24) ein Hardware-Defekt auftritt. Entsprechendes gilt für den zweiten Reglerkanal 20'. Die Eingangsdaten E, E' der beiden Reglerkanal 20, 20' haben in der Regel jedoch minimal unterschiedliche Werte. Dies liegt daran, dass im Datenselektionsprozess durch die Sollwert-Aufbereitungseinrichtung 18 den kanaleigenen Signalen der Vorzug gegeben wird. Daher werden normalerweise die beiden Reglerkanäle 20, 20' leicht unterschiedliche Eingangsdatensätze E, E' verwenden, was zu leicht unterschiedlichen Ergebnissen (Ausgangsdaten) der Kanäle führen muss.

Die Funktion der Sollwert-Aufbereitungseinrichtung 18 sowie der beiden Reglerkanäle 20, 20' während des Betriebs wird nun unter Hinweis auf das Datenflussdiagramm von Fig. 3 erläutert. In Fig. 3 sind nur die gemeinsamen Operationen sowie die Abläufe im Reglerkanal 20 dargestellt. Die Arbeitsweise des Reglerkanals 20' ist identisch zu der des Reglerkanals 20, so dass im folgenden auf eine gesonderte Beschreibung verzichtet wird.

Als erster Schritt 42 erfolgt die Auswahl der als Grundlage der Berechnung dienenden Eingangsdaten E aus den Sollwertsignalen SO und den Rückmeldesignalen R. Im vorliegenden Ausführungsbeispiel wird der Schritt 42 von der Sollwert-Aufbereitungseinrichtung 18 auf die bereits beschriebene Weise ausgeführt. In Ausführungsvarianten können diese Aufgaben ganz oder teilweise von den beiden Reglerkanälen 20, 20' übernommen werden.

Bei der Darstellung des Reglerkanals 20 in Fig. 3 ist links der Datenfluss im Berechnungszweig und rechts der Datenfluss im Kontrollzweig gezeigt. Für jeden Regelkreis, d.h. für jede zu berechnende Funktion, arbeitet eine der beiden Prozessoreinheiten 22, 24 als Berechnungseinheit und die jeweils andere Prozessoreinheit 22, 24 als Kontrolleinheit. Die Berechnungseinheit führt die eigentlichen Berechnungsvorgänge durch (Schritt 44 in Fig. 3), während die Kontrolleinheit die Ergebnisse der Berechnungseinheit kontrolliert und auf Fehler überprüft (Schritt 48 in Fig. 3).

Allgemein führt jede der beiden Prozessoreinheiten 22, 24 eine Vielzahl nebenläufiger oder quasi-paralleler Prozesse aus und arbeitet für manche Regelfunktionen als Berechnungs- und für andere Rechenfunktionen als Kontrolleinheit. Dadurch kann eine gleichmäßige Lastverteilung erzielt werden, denn typischerweise ist für jede Regelfunktion die Berechnung erheblich aufwendiger als die Kontrolle. Die Verwendung der beiden Prozessoreinheiten 22, 24 als Berechnungs- bzw. Kontrolleinheit für jede Regelfunktion ist im vorliegenden Ausführungsbeispiel fest vorgegeben, kann jedoch in Ausführungsvarianten auch flexibel (z.B. belastungsabhängig) gesteuert werden.

Im Berechnungsschritt 44 verarbeitet die jeweilige Berechnungseinheit die Eingangsdaten E gemäß den implementierten Regelgesetzen. Dadurch bildet die Berechnungseinheit die gewünschte Reglerfunktion nach. Im fehlerfreien Normalbetrieb beinhalten die berechneten Ausgangsdaten A1 bzw. A2 (je nachdem, welche der Prozessoreinheiten 22, 24 als Berechnungseinheit arbeitet) alle Informationen, um daraus durch einen Skalierungs- und Umsetzschritt 46 die Steuersignale ST zu bestimmen. Der Schritt 46 wird durch die Umsetzeinheit 38 und die Kanalwahleinheit 40 ausgeführt.

Zur Überwachung erhält die Kontrolleinheit die Eingangsdaten E, die von der Berechnungseinheit bestimmten Ausgangsdaten A1 bzw. A2 und (über die Kommunikationsverbindung K) die entsprechenden Ausgangsdaten A1' bzw. A2' des anderen Reglerkanals 20'. Das von der Kontrolleinheit ausgeführte Verfahren 48 besteht aus einem Überprüfungsschritt mit zwei Kontrollen 50, 52 und einen Auswerteschritt 54.

Die beiden Kontrollen 50, 52 können in beliebiger Reihenfolge nacheinander oder parallel oder ineinander verzahnt ausgeführt werden.

Als erste Kontrolle 50 berechnet die Kontrolleinheit aus den Eingangsdaten E eine eigene Abschätzung der korrekten Berechnungsergebnisse. Diese Abschätzung kann beispielsweise in einer Bestimmung von Ober- und Untergrenzen der zu erwartenden Ergebnisse liegen. Alternativ kann die Kontrolleinheit auch die eigentliche Regelfunktion mit geringerer Genauigkeit und/oder unter vereinfachenden Annahmen berechnen, um ein ungefähres Ergebnis zu erhalten. Die Abschätzung soll erheblich weniger Rechenleistung als die eigentliche Berechnung in der Berechnungseinheit benötigen. Somit wird in der ersten Kontrolle 50 eine kanalinterne Plausibilitätsprüfung der Berechnungsergebnisse durchgeführt. Eine Überschreitung der Ober- und Untergrenzen bzw. eine Abweichung zwischen der Abschätzung und dem von der Berechnungseinheit stammenden Ergebnis wird qualitativ oder quantitativ in Form von Fehlerdaten X1 ausgegeben.

Als zweite Kontrolle 52 vergleicht die Kontrolleinheit die von der Berechnungseinheit gelieferten Berechnungsergebnisse mit den entsprechenden Ergebnissen des anderen Reglerkanals 20', die über die Kommunikationsverbindung K eintreffen. Somit erfolgt eine kanalexterne Überprüfung. Auch hier werden Fehlerdaten X2 bestimmt, die die Abweichung der Berechnungsergebnisse beider Reglerkanäle 20; 20' angeben.

Im hier beschriebenen Ausführungsbeispiel werden für die beiden Kontrollen 50, 52 die Ausgangsdaten A1 bzw. A2 der Berechnungseinheit herangezogen. In Ausführungsalternativen können statt dessen auch die Stellsignale ST, die Zwischensignale Z oder andere geeignete Berechnungsergebnisse oder Zwischenergebnisse für die Abschätzung und Kontrolle verwendet werden. Die Art der überprüften Daten kann sich in den Kontrollen 50, 52 unterscheiden. Natürlich müssen für die Kontrolle 52 entsprechende Daten von beiden Reglerkanälen 20, 20' vorliegen.

Die Fehlerdaten X1, X2 werden im Auswerteschritt 54 bewertet. Im vorliegenden Ausführungsbeispiel wird zunächst überprüft, ob beide Kontrollen 50, 52 eine Fehlfunktion des Reglerkanals 20 signalisieren. Dies wird angenommen, wenn beide Fehlerdaten X1, X2 je einen vorgegebenen Toleranzwert übersteigen. Wenn nur die Kontrolle 52 anspricht, deutet dies auf eine Fehlfunktion des anderen Kanals 20' hin, während ein Ansprechen nur der Kontrolle 50 entweder eine unzulässige Vereinfachung bei der Abschätzung der Berechnungsergebnisse oder eine Fehlfunktion der Kontrolleinheit anzeigt.

Falls beide Kontrollen 50, 52 darauf hinweisen, dass die Ergebnisse der Berechnungseinheit falsch sind, wird in Schritt 54 ein Fehlerintegrator der Kontrolleinheit hochgezählt. Die Hochzähtgeschwindigkeit hängt von dem Maß der Toleranzgrenzenüberschreitung der Fehlerdaten X1, X2 ab. Dabei kann eine beliebige Bewertungsfunktion herangezogen werden, um zum Beispiel deutliche Abweichungen stärker zu berücksichtigen. Die Bewertungsfunktion kann einen stetigen oder stufenweisen Verlauf aufweisen. In Ausführungsalternativen können die Gewichtung der Fehlerdaten X1, X2 und/oder die Berücksichtigung eines zulässigen Toleranzbereichs der Vergleichsergebnisse bereits im Zusammenhang mit den Berechnungsschritten 50, 52 erfolgen.

Überschreitet der Fehlerintegrator der Kontrolleinheit einen vorgegebenen Signalisierungswert (z.B. den Wert 100), so wird in Schritt 54 schließlich das Fehlersignal F11 bzw. F21 (je nachdem, welche Prozessoreinheit 22, 24 als Kontrolleinheit arbeitet) aktiviert. Wenn sich daraufhin bei den Kontrollen 50, 52 keine weitere Fehlfunktion mehr ergibt, so wird der Wert des Fehlerintegrators mit einer vorbestimmten Abklinggeschwindigkeit (z.B. eine Einheit pro Regelzyklus) verringert. Die Berechnungseinheit wird wieder als funktionsfähig gewertet, sobald der Inhalt des Fehlerintegrators einen vorgegebenen Mindestwert (z.B. den Wert 0) unterschreitet. Somit werden durch die Integration der Fehlerdaten X1, X2 singuläre und sich wiederholende Fehlfunktionen der Berechnungseinheit angemessen berücksichtigt.

Bei der Ausführung von Schritt 46 hat die Kanalwahleinheit 40 die Aufgabe, einen Einfluss fehlerhafter Berechnungsdaten auf die erzeugten Stellsignale ST möglichst weitgehend auszuschließen. Dazu wertet die Kanalwahleinheit 40 die Fehlersignale F 11, F 12, F 13, F21, F22 und F23 aus. Bei einem dauernd störungsfreien Betrieb des Reglerkanals 20 ist keines dieser Fehlersignale aktiv. Die Kanalwahleinheit 40 gibt dann die Zwischensignale Z unverändert als Stellsignale ST an die Aktuatoren 14 weiter.

Falls eine Störung des ersten Reglerkanals 20 vorliegt, wird dies durch ein aktives Fehlersignal F11, F12, F13, F21, F22 oder F23 angezeigt. Die Kanalwahleinheiten 40, 40' führen daraufhin eine Kanalumschaltung aus. Das heißt, dass die von der fehlerhaften Berechnungseinheit beeinflussten Zwischensignale Z verworfen werden, indem die in Fig. 2 schematisch gezeigten Schalter der Kanalwahleinheit 40 öffnen. Statt dessen schließen die Schalter der Kanalwahleinheit 40', so dass die Zwischensignale Z' des zweiten Kanals 20' als Stellsignale ST' ausgegeben werden.

Der erste Kanal 20 wird wieder als fehlerfrei gewertet, wenn alle Fehlersignale F11, F12, F13, F21, F22 und F23 deaktiviert wurden. Die Kanalwahleinheit 40 schaltet den ersten Kanal 20 dann wieder bereit, die Kontrolle über die Stellsignale ST zu übernehmen. In dem hier beschriebenen Ausführungsbeispiel verbleibt jedoch die tatsächliche Regelung so lange bei dem zweiten Kanal 20', bis der zweite Kanal 20' aufgrund eines eigenen Fehlerszenarios oder eines manuellen Kommandos, wie eines Pilotenkommandos, eine Kanalumschaltung veranlasst. In diesem Fall erhält die Kanalwahleinheit 40 über die bidirektionale Verbindung W von der Kanalwahleinheit 40' ein entsprechendes Signal. In Ausführungsalternativen schaltet die Kanalwahleinheit 40 dagegen sofort nach der Deaktivierung aller Fehlersignale (oder nach einer gewissen Verzögerungszeit) die Regelung der Stellsignale ST wieder auf den ersten Kanal 20.

Im Ergebnis wird durch das Zusammenwirken der beiden Kanalwahleinheiten 40, 40' erreicht, dass fehlerhafte Berechnungen in einem Kanal 20, 20' dessen erzeugte Stellsignale ST, ST' nicht beeinflussen. Die beiden Kanalwahleinheiten 40, 40' sind identisch aufgebaut und arbeiten im wesentlichen unabhängig voneinander. Sie stehen lediglich über die bidirektionale Verbindung W miteinander in Kontakt. Durch die Beschaltung der Kanalwahleinheiten 40, 40' ergibt sich insgesamt der beschriebene Flip-Flop-Effekt. Die Kanalwahleinheiten 40, 40' sind so ausgelegt, dass sie bei einer internen Fehlfunktion einen sicheren Notbetrieb durchführen.

### Bezugszeichenliste

- 10: Triebwerksbaugruppe
- 12: Sensoren
- 14: Aktuatoren
- 16: (Triebwerks-)Regler
- 18: Sollwert-Aufbereitungseinrichtung
- 20, 20': Reglerkanal
- 22, 22': erste Prozessoreinheit
- 24, 24': zweite Prozessoreinheit
- 26, 26': Prozessormodul
- 28, 28': Busüberwachungslogik
- 30, 30': Überwachungszeitgeber
- 32, 32': Prozessormodul
- 34, 34': Busüberwachungslogik
- 36, 36': Überwachungszeitgeber
- 38, 38': Umsetzeinheit
- 40, 40': Kanalwahleinheit

- 42 - 54: Berechnungs- und Kontrollschritte

- A1, A1': erste Ausgangsdaten
- A2, A2': zweite Ausgangsdaten
- E, E': Eingangsdaten
- F11, F11': Fehlersignal
- F12, F12': Fehlersignal
- F13, F13': Fehlersignal
- F21, F21': Fehlersignal
- F22, F22': Fehlersignal
- F23, F23': Fehlersignal
- I: Istwertsignale
- K: Kommunikationsverbindung
- R: Rückmeldesignale
- ST, ST': Stellsignale
- SO: Sollwertsignale
- V, V': bidirektionale Verbindung
- W: bidirektionale Verbindung
- X1, X2: Fehlerdaten
- Z: Zwischensignale

## Patentansprüche

1. Regler (16) für sicherheitskritische, höchst zuverlässige Anwendungen, mit zwei Reglerkanälen (20, 20'), die je mindestens zwei Prozessoreinheiten (22, 24 bzw. 22', 24') aufweisen, wobei für jede sicherheitskritische Funktion in beiden Reglerkanälen (20, 20') je eine Prozessoreinheit (z.B. 22, 22') als Berechnungseinheit arbeitet, um Berechnungsergebnisse aus zumindest einem Teil von Eingangsdaten (E, E') zu bestimmen, und jeweils eine andere Prozessoreinheit (z.B. 24, 24') als Kontrolleinheit arbeitet, um die Berechnungsergebnisse der Berechnungseinheit erstens mit einer eigenen Abschätzung der korrekten Ergebnisse und zweitens mit entsprechenden Ergebnissen des jeweils anderen Reglerkanals (20', 20) zu vergleichen.

2. Regler nach Anspruch 1, **dadurch gekennzeichnet, dass** die jeweilige Kontrolleinheit dazu eingerichtet ist, bei den Vergleichen ermittelte Abweichungen zu integrieren und ein Fehlersignal (F11, F21, F11', F21') zu erzeugen, wenn der integrierte Abweichungswert eine Fehlfunktion anzeigt.

3. Regler nach Anspruch 2, **dadurch gekennzeichnet, dass** die jeweilige Kontrolleinheit dazu eingerichtet ist, den integrierten Abweichungswert allmählich abklingen zu lassen, wenn bei den Vergleichen keine weiteren Abweichungen ermittelt werden.

4. Regler nach einem der Ansprüche 1 bis 3, **dadurch gekennzeichnet, dass** die jeweilige Kontrolleinheit dazu eingerichtet ist, bei den Vergleichen ermittelte Abweichungen nur dann zu werten, wenn sowohl der Vergleich mit der eigenen Abschätzung der korrekten Ergebnisse als auch der Vergleich mit den entsprechenden Ergebnissen des jeweils anderen Reglerkanals eine Fehlfunktion anzeigen.

5. Regler nach einem der Ansprüche 1 bis 4, **dadurch gekennzeichnet, dass** die überprüften Berechnungsergebnisse Ausgangsdaten (A1, A2, A1', A2') der Berechnungseinheiten sind.

6. Regler nach einem der Ansprüche 1 bis 5, **dadurch gekennzeichnet, dass** er ferner eine Sollwert-Aufbereitungseinrichtung (18) zum Ermitteln der Eingangsdaten (E, E') aus Istwertsignalen (I) von Sensoren (12) einer zu regelnden Baugruppe, wie einer Triebwerksbaugruppe (10), sowie aus Sollwertsignalen (SO) aufweist.

7. Regler nach einem der Ansprüche 1 bis 6, **dadurch gekennzeichnet, dass** er ferner mindestens eine Kanalwahleinheit (40, 40') aufweist, um Stellsignale (ST, ST') für Aktuatoren (14) der zu regelnden Baugruppe, wie einer Triebwerksbaugruppe (10), zu erzeugen, wobei die Kanalwahleinheit (40, 40') dazu eingerichtet ist, als fehlerhaft erkannte Berechnungsergebnisse von einer Beeinflussung der Stellsignale (ST, ST') auszuschließen.

8. Regler nach einem der Ansprüche 1 bis 7, **dadurch gekennzeichnet, dass** der Regler einer Triebwerksregler (16), insbesondere für ein Flugtriebwerk ist.

9. Stell- oder Antriebssystem mit Aktuatoren und Sensoren und einem Regler (16) nach einem der Ansprüche 1 bis 7.

10. Stell-oder Antriebssystem nach Anspruch 9, **dadurch gekennzeichnet, dass** das Stell- oder Antriebssystem ein Triebwerk, insbesondere Flugtriebwerk mit einer Triebwerksgruppe (10) und der Regler ein Triebwerksregler (16) ist.

11. Verfahren zum Regeln eines Stell- oder Antriebssystems, das einen Regler (16) mit zwei Reglerkanälen (20, 20') aufweist, die ihrerseits je mindestens zwei Prozessoreinheiten (22, 24 bzw. 22', 24') aufweisen, mit den für jede sicherheitskritische Funktion in beiden Reglerkanälen (20, 20') ausgeführten Schritten:
- Bestimmen von Berechnungsergebnissen aus zumindest einem Teil von Eingangsdaten (E, E') durch je eine als Berechnungseinheit arbeitende Prozessoreinheit (z.B. 22, 22'),
- Kontrolle (50, 52) der Berechnungsergebnisse der Berechnungseinheit durch jeweils eine andere Prozessoreinheit (z.B. 24, 24'), die als Kontrolleinheit arbeitet, wobei die Berechnungsergebnisse erstens mit einer eigenen Abschätzung der korrekten Ergebnisse und zweitens mit entsprechenden Ergebnissen des jeweils anderen Regterkanals (20', 20) verglichen werden, und
- Auswerten (54) der in den beiden Vergleichen ermittelten Abweichungen, um ein Fehlersignal (F11, F21, F11', F21') zu erzeugen.

12. Verfahren nach Anspruch 11, **dadurch gekennzeichnet, dass** ein Regler (16) nach einem der Ansprüche 1 bis 7 verwendet wird.

13. Verfahren nach einem der Ansprüche 11 oder 12, **dadurch gekennzeichnet, dass** es zum Regeln eines Triebwerks eingesetzt wird.

## Claims

1. Control unit (16) for safety-critical, high reliability applications, with two control channels (20, 20'), each of which is provided with at least two processor units (22, 24 or 22', 24' respectively), whereby, for each safety-critical function, one processor unit (e.g. 22, 22') in each of the control channels (20, 20') acts as a calculation unit to determine calculation results from at least a part of input data (E, E') and the other processor unit (e.g. 24, 24') acts as a verifying unit to compare the calculation results of the calculation unit first to an own estimate of the correct results and second to corresponding results of the other control channel (20', 20).

2. Control unit according to claim 1, **characterised in that** each verifying unit is designed to integrate any deviations found during the comparison process and to generate a fault signal (F11, F21, F11', F21') if the integrated deviation value indicates a malfunction.

3. Control unit according to claim 2, **characterised in that** each verifying unit is designed to let the integrated deviation value decay gradually if no further deviations are found during the comparison process.

4. Control unit according to any of claims 1 to 3, **characterised in that** each verifying unit is designed to evaluate deviations found during the comparison process only if both the comparison to its own estimate of the correct results and the comparison to the corresponding results of the other control channel indicate a malfunction.

5. Control unit according to any of claims 1 to 4, **characterised in that** the verified calculation results are output data (A1, A2, A1', A2') of the calculation units.

6. Control unit according to any of claims 1 to 5, **characterised in that** it further comprises a set value editing unit (18) for determining the input data (E, E') from actual value signals (I) from sensors (12) of an assembly, such as an engine assembly (10), to be controlled and from set value signals (SO).

7. Control unit according to any of claims 1 to 6, **characterised in that** it further comprises at least one channel selection unit (40, 40') to generate control signals (ST, ST') for actuators (14) of the assembly, such as an engine assembly (10), to be controlled, whereby the channel selection unit (40, 40') is designed to prevent any calculation results recognised as incorrect from affecting the control signals (ST, ST').

8. Control unit according to any of claims 1 to 7, **characterised in that** it is the control unit (16) for an engine, in particular for an aircraft engine.

9. Actuating or drive system with actuators and sensors and a control unit (16) according to any of claims 1 to 7.

10. Actuating or drive system according to claim 9, **characterised in that** the actuating or drive system is an engine, in particular an aircraft engine with an engine assembly (10), and the control unit is an engine control unit (16).

11. Method for the control of an actuating or drive system incorporating a control unit (16) with two control channels (20, 20'), each of which is provided with at least two processor units (22, 24 or 22', 24' respectively), whereby the following steps are performed in both control channels (20, 20') for each safety-critical function:
- Determination of calculation results from at least a part of input data (E, E') by one processor unit (e.g. 22, 22') acting as a calculation unit;
- Verification (50, 52) of the calculation results of the calculation unit by the other processor unit (e.g. 24, 24') acting as a verifying unit, whereby the calculation results are first compared to an own estimate of the correct results and second to corresponding results of the other control channel (20', 20); and
- Evaluation (54) of the deviations found in the two comparison processes to generate a fault signal (F11, F21, F11', F21').

12. Method according to claim 11, **characterised in that** a control unit (16) according to any of claims 1 to 7 is used.

13. Method according to claim 11 or 12, **characterised in that** it is used to control an engine.

## Revendications

1. Régulateur (16) pour des applications hautement fiables critiques pour la sécurité, avec deux canaux de régulateur (20, 20') qui comportent chacun au moins deux unités de processeur (22, 24 et/ou 22', 24'), une unité de processeur (par ex. 22, 22') fonctionnant comme unité de calcul pour chaque fonction critique pour la sécurité dans les deux canaux de régulateur (20, 20'), afin de déterminer des résultats de calcul issus d'au moins une partie des données d'entrée (E, E') et une autre unité de processeur (par ex. 24, 24') fonctionnant respectivement comme unité de contrôle, afin de comparer les résultats du calcul de l'unité de calcul premièrement avec une propre évaluation des résultats corrects et, deuxièmement, avec des résultats correspondants de l'autre canal de régulateur correspondant (20, 20').

2. Régulateur selon la revendication 1, **caractérisé en ce que** l'unité de contrôle respective est installée pour intégrer des divergences détectées lors des comparaisons et pour générer un signal de défaut (F11, F21, F11', F21') lorsque la valeur de divergence intégrée indique un mauvais fonctionnement.

3. Régulateur selon la revendication 2, **caractérisé en ce que** l'unité de contrôle respective est installée pour faire décroître progressivement la valeur de divergence intégrée lorsque d'autres divergences ne sont pas détectées lors des comparaisons.

4. Régulateur selon une des revendications 1 à 3, **caractérisé en ce que** l'unité de contrôle respective est installée pour ne prendre en compte les divergences détectées lors des contrôles que si non seulement la comparaison avec la propre évaluation des résultats corrects, nais encore la comparaison avec les résultats correspondants de l'autre canal de régulateur respectif indiquent un mauvais fonctionnement.

5. Régulateur selon une des revendications 1 à 4, **caractérisé en ce que** les résultats de calcul vérifiés sont des données de sortie (A1, A2, A1', A2') des unités de calcul.

6. Régulateur selon une des revendications 1 à 5, **caractérisé en ce qu'**il comporte en outre un équipement de traitement des valeurs de consigne (18) pour déterminer les données d'entrée (E, E') à partir de signaux de valeurs effectives (I) de capteurs (12) d'un sous-groupe à réguler, comme un sous-groupe de propulseur (10), ainsi qu'à partir de signaux de valeur de consigne (SO).

7. Régulateur selon une des revendications 1 à 6, **caractérisé en ce qu'**il comporte en outre au moins une unité de sélection de canaux (40, 40'), afin de générer des signaux de réglage (ST, ST') pour des actionneurs (14) du sous-groupe à réguler, comme un sous-groupe de propulseur (10), l'unité de sélection de canaux (40, 40') étant installée pour empêcher des résultats de calcul reconnus comme erronés d'influencer les signaux de réglage (ST, ST').

8. Régulateur selon une des revendications 1 à 7,
**caractérisé en ce que**
le régulateur est un régulateur de propulseur (16), en particulier pour un propulseur de vol.

9. Système de réglage ou d'entraînement avec des actionneurs et des capteurs ainsi qu'un régulateur (16) selon une des revendications 1 à 7.

10. Système de réglage ou d'entraînement selon la revendication 9,
**caractérisé en ce que**
le système de réglage ou d'entraînement est un propulseur, en particulier un propulseur de vol avec un groupe motoprcpulseur (10), et le régulateur un régulateur de propulseur (16).

11. Procédé de régulation d'un système de réglage ou d'entraînement qui comporte un régulateur (16) avec deux canaux de régulateur (20, 20'), qui comportent de leur côté chacun au moins deux unités de processeur (22, 24 et/ou 22', 24'), avec les étapes effectuées dans les deux canaux de régulateur (20, 20') pour chaque fonction critique pour la sécurité :
- détermination de résultats de calculs issus d'au moins une partie de données d'entrée (E, E') par une unité de processeur (par ex. 22, 22') fonctionnant conme unité de calcul respectivement,
- contrôle (50, 52) des résultats de calcul de l'unité de calcul respectivement par une autre unité de processeur (par ex. 24, 24'), qui fonctionne comme unité de contrôle, les résultats de calcul étant comparés premièrement avec une propre évaluation des résultats corrects et, deuxièmement, avec des résultats correspondants de l'autre canal de régulateur (20, 20') respectivement et
- analyse (54) des divergences détectées lors des deux comparaisons, afin de générer un signal de défaut (F11, F21, F11', F21').

12. Procédé selon la revendication 11,
**caractérisé en ce qu'**
un régulateur (16) selon une des revendications 1 à 7 est utilisé.

13. Procédé selon une des revendications 11 ou 12,
**caractérisé en ce qu'**
il est utilisé pour réguler un propulseur.
